Europäisches Patentamt

European Patent Office

Office européen des brevets

(19)

(11) **EP 0 904 225 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(51) Int Cl.⁷: **B62D 5/04**

(21) Anmeldenummer: **98924024.7**

(86) Internationale Anmeldenummer:
**PCT/DE98/00811**

(22) Anmeldetag: **19.03.1998**

(87) Internationale Veröffentlichungsnummer:
**WO 98/43865 (08.10.1998 Gazette 1998/40)**

(54) **VERFAHREN UND VORRICHTUNG ZUM BETRIEB EINES LENKSYSTEMS FÜR EIN KRAFTFAHRZEUG**

METHOD AND DEVICE FOR OPERATING A STEERING SYSTEM FOR A MOTOR VEHICLE

PROCEDE ET DISPOSITIF POUR LE FONCTIONNEMENT D'UN SYSTEME DE DIRECTION D'UN VEHICULE A MOTEUR

(84) Benannte Vertragsstaaten:
**DE FR GB IT**

(30) Priorität: **02.04.1997 DE 19713576**

(43) Veröffentlichungstag der Anmeldung:
**31.03.1999 Patentblatt 1999/13**

(73) Patentinhaber: **ROBERT BOSCH GMBH**
**70442 Stuttgart (DE)**

(72) Erfinder:
• **HACKL, Matthias**
**D-71665 Vaihingen (DE)**
• **KRAEMER, Wolfgang**
**D-70191 Stuttgart (DE)**

(56) Entgegenhaltungen:
**DE-A- 3 908 217      GB-A- 2 170 763**

EP 0 904 225 B1

## Beschreibung

Stand der Technik

Die Erfindung betrifft ein Verfahren bzw. eine Vorrichtung zum Betrieb eines Lenksystems für ein Kraftfahrzeug mit den Merkmalen der Oberbegriffe der unabhängigen Ansprüche.

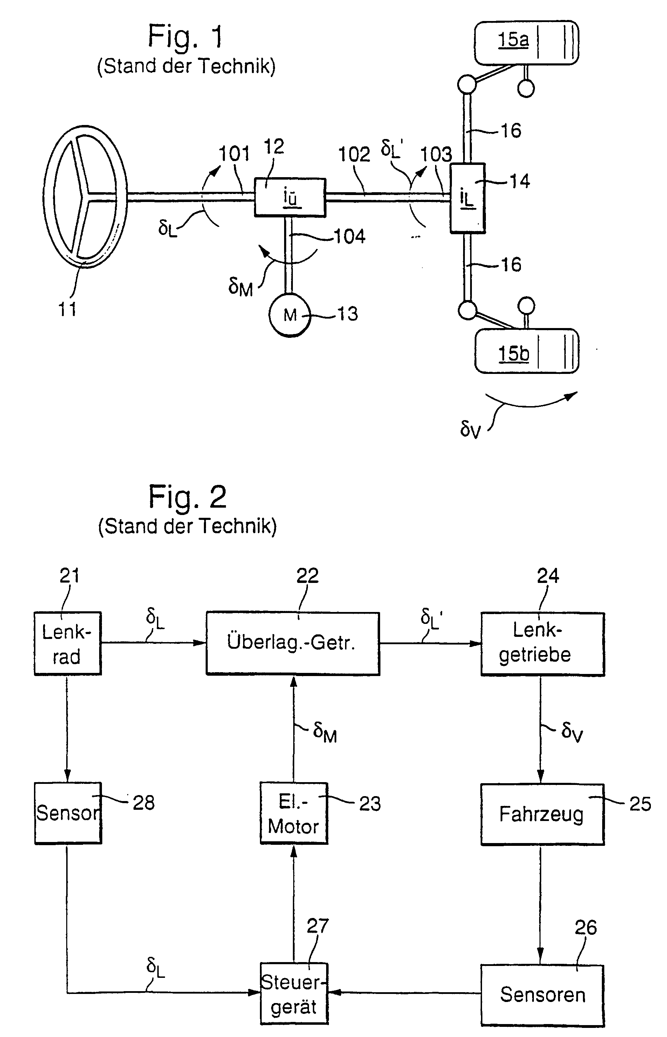

Ein solches Lenksystem ist aus der DE-OS 40 31 316 (entspricht der US 5,205,371) bekannt und soll, soweit es zum Verständnis der vorliegenden Erfindung relevant ist, anhand der Figuren 1 und 2 erläutert werden. Bei einem solchen Lenksystem werden die vom Fahrer durch das Lenkrad 11 bzw. 21 aufgebrachten Lenkbewegungen, der durch den Sensor 28 erfaßte Lenkradwinkel $\delta_L$, in dem Überlagerungsgetriebe 12 bzw. 22 mit den Bewegungen des Stellantriebes 13 bzw. 23, dem Motorwinkel $\delta_M$, überlagert. Die so entstandene überlagerte Bewegung $\delta_L'$ wird über das Lenkgetriebe 14 bzw. das Lenkgestänge 16 an die lenkbar ausgelegten Räder 15a und 15b zur Einstellung des Lenkwinkels $\delta_V$ weitergeleitet. Hierbei kann der Stellantrieb 13 bzw. 23 als Elektromotor ausgelegt sein. Das Funktionsprinzip eines solchen Servolenksystems besteht darin, daß die Lenkung durch die Übersetzung $i_ü$ des Überlagerungsgetriebes 12 bzw. 22 sehr indirekt gemacht werden kann und damit geringe Lenkradmomente $M_L$ erreicht werden können. Dadurch bedingte, sehr große Lenkradwinkel $\delta_L$ werden vermieden, indem geeignete Motorwinkel $\delta_M$ überlagert werden, so daß entsprechend dem Zusammenhang

$$\delta_L' = \delta_L/i_ü + \delta_M$$

mit Lenkradwinkeln üblicher Größe erforderliche Ausgangswinkel $\delta_L'$ eingestellt werden können. Der zur Lenkunterstützung erforderliche Motorwinkel $\delta_M$ bzw. sein Sollwert wird aus dem Lenkradwinkel $\delta_L$ bestimmt. Darüber hinaus kann der Motorwinkel $\delta_M$ auch abhängig von Signalen Sm gewählt werden, wobei diese Signale Sm die durch die Sensoren 26 erfaßten Fahrzeugbewegungen repräsentieren.

Weiterhin ist allgemein bekannt, daß die Radlenkwinkel $\delta_V$ konstruktionsbedingt durch sogenannte Lenkanschläge begrenzt sind.

Die Aufgabe der vorliegenden Erfindung besteht darin, bei einer solchen Überlagerungslenkung die Lenkanschläge sicherheits- und komfortfördernd zu berücksichtigen.

Diese Aufgabe wird durch die Merkmalskombinationen der unabhängigen Ansprüche gelöst.

Vorteile der Erfindung

Wie erwähnt betrifft die Erfindung ein Lenksystem für ein Kraftfahrzeug mit wenigstens einem lenkbaren Rad, einem Stellantrieb und einem Überlagerungsgetriebe. Mittels des Überlagerungsgetriebes wird die durch den Fahrer des Fahrzeugs initiierte Lenkradwinkel bewegung und die durch den Stellantrieb initiierte Ausgangswinkel bewegung zur Erzeugung der Lenkbewegung des lenkbaren Rades innerhalb vorgegebener Lenkanschläge überlagert. Die Ausgangswinkelbewegung wird dabei wenigstens abhängig von des erfaßten Lenkradwinkel bewegung gebildet.

Der Kern der Erfindung besteht darin, daß vor Erreichen eines Lenkanschlags die durch den Stellantrieb initiierte Ausgangswinkelbewegung mit einem vorgebbaren oder vorgegebenen Verhalten reduziert wird.

Erfindungsgemäß wurde erkannt, daß bei Erreichen der die Radlenkwinkel begrenzenden Anschläge kein weiterer Zusatzwinkel mehr überlagert werden darf. Ansonsten wird das Lenkrad entgegen der bis dahin vorliegenden Lenkraddrehrichtung verdreht, wodurch der Fahrer stark irritiert wird. Bei Überlagerung des Zusatzwinkels bis nahe an die Anschläge entsteht jedoch gerade bei schnellen Lenkbewegungen, beispielsweise beim Wenden in drei Zügen, aufgrund des trägheitsbedingten Nachlaufs des Stellantriebs (beispielsweise Nachlauf des Motorankers bei der Verwendung eines Elektromotors) das o.g. Problem des Lenkradzurückdrehens, das mit dem erfindungsgemäßen Auslauf der Lenkunterstützung im Bereich der Lenkanschläge wirksam verhindert wird. Durch die Erfindung gelangt man bei einer Servolenkung nach dem Bewegungsüberlagerungsprinzip zu einem Sicherheitsgewinn, da der Fahrer nicht durch unerwartete Lenkraddrehung irritiert wird. Darüber hinaus bedeutet die Anwendung der Erfindung einen Komfortgewinn durch den kontinuierlichen Auslauf der Lenkunterstützung.

In einer vorteilhaften Ausgestaltung der Erfindung ist vorgesehen, daß vor Erreichen eines Lenkanschlags die durch den Stellantrieb initiierte Ausgangswinkel bewegungen auf den Wert Null, also bis zum Stillstand des Stellantriebs, reduziert wird. Im Bereich der Lenkanschläge findet somit keine Servounterstützung mehr statt.

Besonders vorteilhaft ist es, die durch den Stellantrieb initiierte Ausgangswinkel bewegung innerhalb eines bestimmten Bereichs vor Erreichen eines Lenkanschlags zu reduzieren, insbesondere auf den Wert Null. Auch diese Reduzierung kann mit einem vorgebbaren oder vorgegebenen Verhalten geschehen.

Darüber hinaus ist sehr vorteilhaft, daß im Anschluß an die Reduktion der durch den Stellantrieb initiierten Ausgangswinkel bewegung der Stellantrieb vor Erreichen eines Lenkanschlags abgeschaltet und/oder abgebremst wird. Hierbei ist insbesondere vorgesehen ist, daß die Abschaltung und/oder Abbremsung abhängig von einem Vergleich der erfaßten Lenkbewegung des lenkbaren Rades und/oder der erfaßten durch den Fahrer des Fahrzeugs initiierten Lenkradwinkel bewegung mit einem vorgebbaren oder vorgegebenen Schwellwert getätigt wird. In dieser Ausgestaltung wird also ein zweistufiges Vorgehen im Bereich der Lenkanschläge vorgeschlagen, wobei zunächst in einem Bereich vor dem Erreichen eines Lenkanschlages eine Reduktion der Stellantriebsbewegungen stattfindet und danach ein Abschalten und/oder Abbremsen getätigt wird. Dies hat den Hintergrund, daß es bei der Regelung des Stellantriebs zu Regelabweichungen und/oder zu einem gewissen Nachlauf kommen kann, so daß eine bloße Ansteuerung des Stellantriebs im Sinne einer Reduktion nicht ausreicht, um ihn bei Erreichen eines Lenkanschlags sicher zum Stillstand zu bringen.

Das Erreichen der Lenkanschläge und/oder der Beginn und/oder das Ende der Reduktion der durch den Stellantrieb initiierten Bewegung kann durch eine Erfassung der Lenkbewegung des lenkbaren Rades und/oder durch eine Erfassung der durch den Fahrer des Fahrzeugs initiierten Lenkbewegung geschehen.

Weiterhin ist insbesondere vorgesehen, daß der erwähnte Bereich durch wenigstens einen Schwellwert für die Lenkbewegung des lenkbaren Rades und/ oder für die durch den Fahrer des Fahrzeugs initiierte Lenkbewegung bestimmt wird.

Weitere vorteilhafte Ausgestaltungen sind den Unteransprüchen zu entnehmen.

Zeichnungen

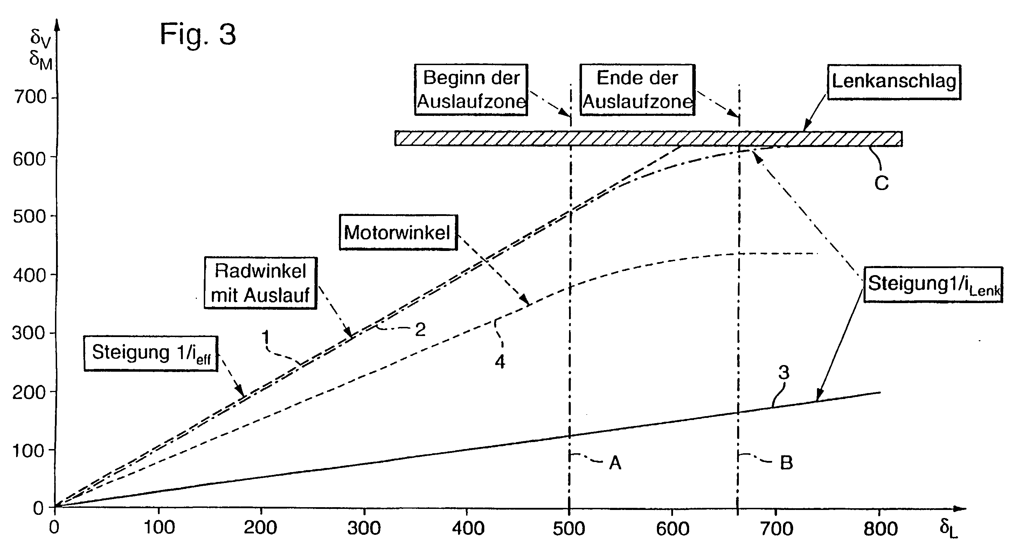

Die Figuren 1 und 2 zeigen schematisch das Lenksystem nach dem Stand der Technik, von dem die Erfindung im Ausführungsbeispiel ausgeht. Die Figuren 3, 4 und 5 stellen unterschiedliche Verläufe der Lenkwinkel bzw. deren Geschwindigkeiten dar.

Ausführungsbeispiel

Im folgenden soll die Erfindung anhand eines Ausführungsbeispiels dargestellt werden. Dabei wird beispielhaft von einer eingangs erwähnten Überlagerungslenkung ausgegangen.

Die Figur 1 bzw. Figur 2 zeigt mit den Bezugszeichen 11 bzw. 21 ein von dem Fahrer des Fahrzeugs betätigbares Lenkrad. Durch die Betätigung des Lenkrades 11 bzw. 21 wird dem Überlagerungsgetriebe 12 bzw. 22 der Lenkradwinkel $\delta_L$ bzw. das Lenkradmoment $M_L$ zugeführt. Gleichzeitig wird dem Überlagerungsgetriebe 12 bzw. 22 der Motorwinkel $\delta_M$ des Stellantriebes 13 bzw. 23 zugeleitet, wobei der Stellantrieb als Elektromotor ausgebildet sein kann. Ausgangsseitig des Überlagerungsgetriebes 12 bzw. 22 wird die überlagerte Bewegung $\delta_L{'}$ dem Lenkgetriebe 14 bzw. 24 zugeführt, das wiederum über das Lenkgestänge 16 entsprechend dem Gesamtwinkel $\delta_L{'}$ die lenkbaren Räder 15a und 15b mit dem Lenkwinkel $\delta_V$ beaufschlagt. In der Figur 2 sind weiterhin Sensoren 28 und 26 zu sehen, wobei der Sensor 28 den Lenkradwinkel $\delta_L$ detektiert und dem Steuergerät 26 zuführt, während mit dem Bezugszeichen 26 Sensoren gekennzeichnet sind, die die Bewegungen des Fahrzeugs 26 (bspw. Gierbewegungen, Querbeschleunigung, Fahrzeuggeschwindigkeit usw.) sensieren und dem Steuergerät 27 zuführen. Das Steuergerät 27 ermittelt, abhängig vom erfaßten Lenkradwinkel $\delta_L$ und ggf. abhängig von den Fahrzeugbewegungen einer Stellgröße u zur Ansteuerung des Stellantriebs 13 bzw. 23.

Wie schon erwähnt darf bei Erreichen der die Radwinkel $\delta_V$ begrenzenden Anschläge kein weiterer Zusatzwinkel $\delta_M$ überlagert werden. Ansonsten wird das Lenkrad 11 bzw. 21 entgegen der bis dahin vorliegenden Lenkraddrehrichtung verdreht, wodurch der Fahrer stark irritiert wird. Bei der Überlagerung des Zusatzwinkels $\delta_M$ bis nahe an die Anschläge entsteht jedoch gerade bei schnellen Lenkbewegungen, beispielsweise beim Wenden in drei Zügen, aufgrund des trägheitsbedingten Nachlaufs des Stellantriebs 13 bzw. 23 (beispielsweise durch die Trägheit des Motorankers bei der Auslegung des Stellantriebs als Elektromotor) das o.g. Problem des Lenkradzurückdrehens, das mit dem im folgenden dargestellten Auslauf der Lenkunterstützung im Bereich der Anschläge verhindert werden kann.

Der Auslauf der Lenkunterstützung besteht dabei aus zwei Teilen, der Auslaufzone und der Abschaltschwelle. Beide werden nachfolgend beschrieben.

Auslaufzone:

In einer Servolenkanlage nach dem Bewegungsüberlagerungsprinzip ist eine Lenkübersetzung

$$i_{Lenk} = i_{\ddot{U}} * i_L$$

festgelegt, wobei $i_{\ddot{U}}$ die Übersetzung des Überlagerungsgetriebes 12 bzw. 22 und $i_L$ die Übersetzung des Lenkgetriebes 14 bzw. 24 ist. Die Lenkübersetzung $i_{Lenk}$ wirkt dann, wenn keine Zusatzwinkel $\delta_M$ eingeleitet werden. Durch die Winkelüberlagerung wird der Winkelzusammenhang zwischen $\delta_L$ und $\delta_L{'}$ bzw. $\delta_V$ so verändert, daß sich für den Fahrer die Übersetzung $i_{eff}$ ergibt.

Gemäß der Erfindung soll der Stellmotor 13 bzw. 23 zur Erzeugung des Zusatzwinkels $\delta_M$ im Bereich der Lenkanschläge stillstehen, d.h. zwischen Lenkrad und Rädern soll im Winkelbereich kurz vor den Lenkanschlägen die Übersetzung $i_{Lenk}$ wirken. Im übrigen Lenkwinkelbereich soll jedoch der Winkelzusammenhang $i_{eff}$ gelten, der im allgemeinen deutlich kleiner als $i_{Lenk}$ ist.

Die Figur 3 zeigt beispielhaft Verläufe des Motorwinkels $\delta_M$ (Verlauf 4), des Radlenkwinkels $\delta_V$ (Verlauf 2) sowie den Verlauf der Steigung $1/i_{eff}$ (Verlauf 1) und der Steigung $1/i_{Lenk}$ (Verlauf 3). Auf der horizontalen Achse ist dabei der durch den Fahrer durch das Lenkrad initiierte Lenkradwinkel $\delta_L$ und auf der vertikalen Achse der Radlenkwinkel $\delta_V$ bzw. für den Verlauf 4 der Motorwinkel $\delta_M$ aufgetragen. Weiterhin ist der Auslaufbereich mit den Grenzen A und B und der Lenkanschlag mit der Grenze C markiert.

Um ein komfortables Lenkverhalten zu erzielen, muß ein kontinuierlicher Übergang von $i_{eff}$ nach $i_{Lenk}$ und zurück erreicht werden, der innerhalb einer kurz vor den Lenkanschlägen (Grenze C) liegenden Auslaufzone (Bereich zwischen den Grenzen A und B) erfolgt.

Der erfindungsgemäße Auslauf zeichnet sich beispielsweise durch ein Parabelstück aus, dessen Anfang eine Steigung entsprechend $1/i_{eff}$ und dessen Ende eine Steigung entsprechend $1/i_{Lenk}$ aufweist.

Alternativ zum parabelförmigen Auslauf, kann der Übergang zwischen den beiden Steigungen in der Auslaufzone auch mit einem Kreisbogenstück oder sinusförmig ausgeführt werden.

Der erfindungsgemäße Auslauf des Zusatzlenkwinkels $\delta_M$ wird dabei durch eine entsprechende Ansteuerung des Stellantriebs 23 durch das Steuergerät 27 erzielt. Diese Ansteuerung kann beispielsweise derart geschehen, daß ein den gewünschten Verlauf des Motorwinkels $\delta_M$ repräsentierender Sollwert $\delta_{M,soll}$ einem unterlagerten Lageregler zugeführt wird, der dann den Motor 23 derart ansteuert, daß möglichst genau ein entsprechender Istwinkelwert $\delta_{M,ist}$ eingestellt wird.

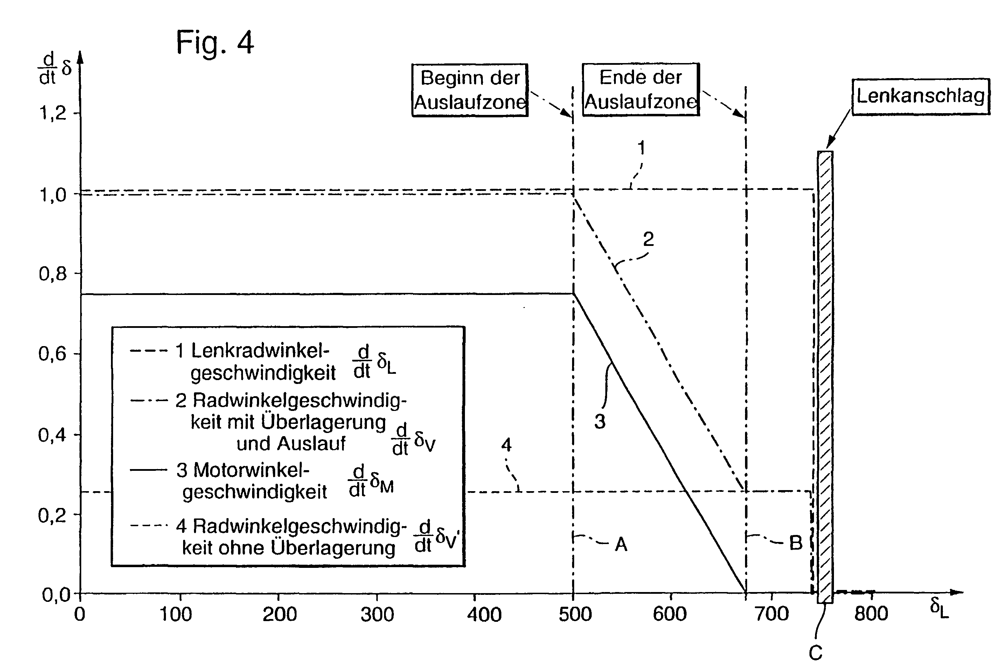

Die Figur 4 zeigt den Lenkradwinkel $\delta_L$ (horizontale Achse) gegen die Lenkradwinkelgeschwindigkeit $d\delta_L/dt$ mit Überlagerung des Motorlenkwinkels $\delta_M$ (Verlauf 1), die Radlenkwinkelgeschwindigkeit $d\delta_V/dt$ (Verlauf 2), die Motorwinkelgeschwindigkeit $d\delta_M/dt$ (Verlauf 3) und die Radlenkwinkelgeschwindigkeit $d\delta_V/dt$ ohne Überlagerung des Motorlenkwinkels $\delta_M$ (Verlauf 4). Die Auslaufzone ist dabei wieder mit den Grenzen A und B und der Lenkanschlag mit der Grenze C gekennzeichnet.

Anhand der Figur 4 erkennt man, daß der parabelförmige Auslauf auch hinsichtlich des Verlaufs 3 der Motorwinkelgeschwindigkeit $d\delta_M/dt$ günstig ist, da diese in der Auslaufzone (A, B) kontinuierlich heruntergefahren wird.

Abschaltschwelle:

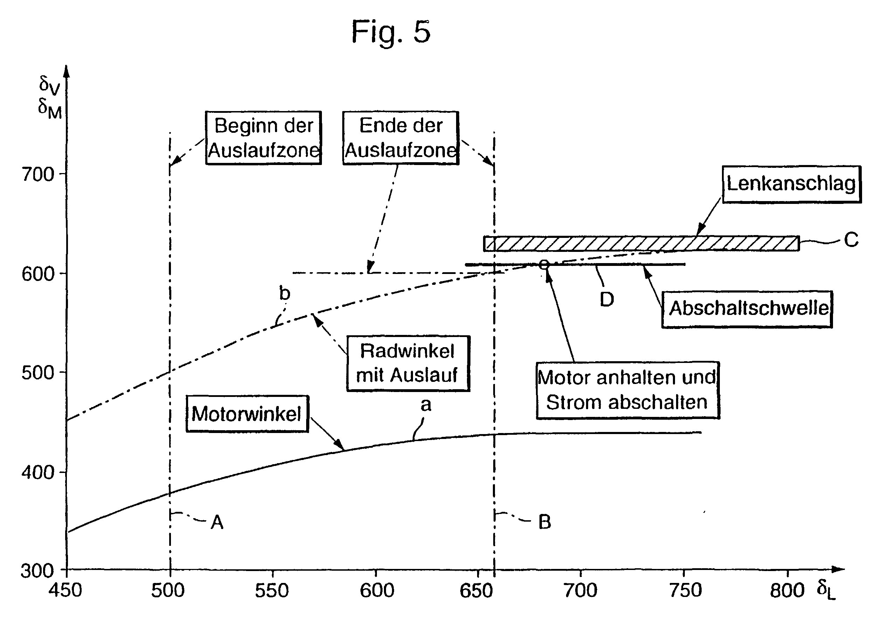

Die Figur 5 zeigt hierzu eine ähnlichen Auftrag wie die Figur 3.

Bei dem Stellmotor 13 bzw. 23 für den Zusatzwinkel $\delta_M$ handelt es sich üblicherweise um einen lagegeregelten Motor, insbesondere einen Elektromotor. Hier treten Regelabweichungen ($\delta_{M,ist}$-$\delta_{M,soll}$) vom vorgegebenen Winkelsollwert $\delta_{M,soll}$ auf, beispielsweise bei schnellen Lenkmanövern oder auch durch ein Nachlaufen des Motorankers und der angeschlossenen Getriebeteile aufgrund des Massenträgheitsmoments. Es kommt daher vor, daß der Motor oberhalb der Auslaufzone (über die Grenze B zum Lenkanschlag hin) noch dreht, obwohl er in diesem Bereich schon stillstehen muß.

Wie in der Figur 5 zu sehen ist, wird aus diesem Grund kurz nach dem Ende B der Auslaufzone vor dem Lenkanschlag C eine Abschaltschwelle D festgelegt, ab deren Überschreiten der Stellmotor durch entsprechende Bestromung bis zum Stillstand abgebremst und dann abgeschaltet wird.

Das Getriebe 12 bzw 22, das im allgemeinem als selbsthemmendes Getriebe ausgeführt ist, verhindert dann eine Änderung des Zusatzwinkels $\delta_{M,ist}$ durch evtl. anliegende Drehmomente, womit ein Zurückdrehen des Lenkrads 11 bzw. 21 sicher vermieden wird.

**Patentansprüche**

1. Verfahren zum Betrieb eines Lenksystems für ein Kraftfahrzeug mit wenigstens einem lenkbaren Rad (15a, 15b), einem Stellantrieb (13; 23) und einem Überlagerungsgetriebe (12; 22), mittels dem die durch den Fahrer des Fahrzeugs initiierte Lenkradwinkelbewegung ($\delta_L$) und die durch den Stellantrieb (13; 23) initiierte Ausgangswinkelbewegung ($\delta_M$) zur Erzeugung der Lenkbewegung ($\delta_V$) des lenkbaren Rades (15a, 15b) innerhalb vorgegebener Lenkanschläge (C) überlagert werden, wobei die Ausgangswinkelbewegung ($\delta_M$) wenigstens abhängig von der erfaßten Lenkradwinkelbewegung ($\delta_L$) gebildet wird, **dadurch gekennzeichnet, daß** vor Erreichen eines Lenkanschlags (C) die durch den Stellantrieb (13; 23) initiierte Ausgangswinkelbewegung ($\delta_M$) mit einem vorgebbaren oder vorgegebenen Verhalten reduziert wird.

2. Verfahren nach Anspruch 1, **dadurch gekennzeichnet, daß** vor Erreichen eines Lenkanschlags (C) die durch den Stellantrieb (13; 23) initiierte Ausgangswinkel bewegung ($\delta_M$) auf den Wert Null reduziert wird.

3. Verfahren nach Anspruch 1, **dadurch gekennzeichnet, daß** die durch den Stellantrieb (13; 23) initiierte Ausgangswinkel bewegung ($\delta_M$) innerhalb eines bestimmten Bereichs (A, B) vor Erreichen eines Lenkanschlags wenigstens reduziert wird, insbesondere mit einem vorgebbaren oder vorgegebenen Verhalten.

4. Verfahren nach Anspruch 3, **dadurch gekennzeichnet, daß** nach der Reduktion der durch den Stellantrieb (13; 23) initiierten Ausgangswinkel bewegung ($\delta_M$) der Stellantrieb vor Erreichen eines Lenkanschlags abgeschaltet und/oder abgebremst wird, wobei insbesondere vorgesehen ist, daß die Abschaltung und/oder Abbremsung abhängig von einem Vergleich der erfaßten Lenkbewegung ($\delta_V$) des lenkbaren Rades (15a, 15b) und/oder der erfaßten durch den Fahrer des Fahrzeugs initiierten Lenkradwinkel bewegung ($\delta_L$) mit einem vorgebbaren oder vorgegebenen Schwellwert (D) getätigt wird.

**5.** Verfahren nach einem der vorhergehenden Ansprüche, **dadurch gekennzeichnet, daß** das Erreichen der Lenkanschläge und/oder der Beginn und/oder das Ende der Reduktion der durch den Stellantrieb (13; 23) initiierten Ausgangswinkel bewegung ($\delta_M$) durch eine Erfassung der Lenkbewegung ($\delta_V$) des lenkbaren Rades (15a, 15b) und/oder durch eine Erfassung der durch den Fahrer des Fahrzeugs initiierten Lenkradwinkel bewegung ($\delta_L$) geschieht.

**6.** Verfahren nach Anspruch 3 und 5, **dadurch gekennzeichnet, daß** der Bereich (A, B) durch wenigstens einen Schwellwert für die Lenkbewegung ($\delta_V$) des lenkbaren Rades (15a, 15b) und/oder für die durch den Fahrer des Fahrzeugs initiierte Lenkradwinkel bewegung ($\delta_L$) bestimmt wird.

**7.** Vorrichtung zum Betrieb eines Lenksystems für ein Kraftfahrzeug mit wenigstens einem lenkbaren Rad (15a, 15b), einem Stellantrieb (13; 23) und einem Überlagerungsgetriebe (12; 22), mittels dem die durch den Fahrer des Fahrzeugs initiierte Lenkradwinkelbewegung ($\delta_L$) und die durch den Stellantrieb (13; 23) initiierte Ausgangswinkelbewegung ($\delta_M$) zur Erzeugung der Lenkbewegung ($\delta_V$) des lenkbaren Rades (15a, 15b) innerhalb vorgegebener Lenkanschläge (C) überlagert werden, wobei Mittel (27, 23) vorgesehen sind, mittels der die Ausgangswinkelbewegung ($\delta_M$) wenigstens abhängig von der erfaßten Lenkradwinkelbewegung ($\delta_L$) gebildet wird, **dadurch gekennzeichnet, daß** Mittel (27) vorgesehen sind, mittels der vor Erreichen eines Lenkanschlags (C) die durch den Stellantrieb (13; 23) initiierte Ausgangswinkelbewegung ($\delta_M$) mit einem vorgebbaren oder vorgegebenen Verhalten reduziert, insbesondere auf den Wert Null, wird.

**8.** Vorrichtung nach Anspruch 9, **dadurch gekennzeichnet, daß** Mittel vorgesehen sind, mittels der nach der Reduktion der durch den Stellantrieb (13; 23) initiierten Ausgangswinkel bewegung ($\delta_M$) der Stellantrieb vor Erreichen eines Lenkanschlags abgeschaltet und/oder abgebremst wird, wobei insbesondere vorgesehen ist, daß die Abschaltung und/oder Abbremsung abhängig von einem Vergleich der erfaßten Lenkbewegung ($\delta_V$) des lenkbaren Rades (15a, 15b) und/oder der erfaßten durch Lenkradwinkel bewegung den Fahrer des Fahrzeugs initiierten Lenkradwinkel bewegung ($\delta_L$) mit einem vorgebbaren oder vorgegebenen Schwellwert (D) getätigt wird.

**Claims**

**1.** Method for operating a steering system for a motor vehicle with at least one steerable wheel (15a, 15b), with an actuating drive (13; 23) and with a variable-ratio gear unit (12; 22), by means of which the steering-wheel angle movement ($\delta_L$) initiated by the driver of the vehicle and the output-angle movement ($\delta_M$) initiated by the actuating drive (13; 23) are superposed in order to generate the steering movement ($\delta_V$) of the steerable wheel (15a, 15b) within predetermined steering locks (C), the output-angle movement ($\delta_M$) being formed at least as a function of the detected steering-wheel angle movement ($\delta_L$), **characterized in that**, before a steering lock (C) is reached, the output-angle movement ($\delta_M$) initiated by the actuating drive (13; 23) is reduced by means of a predeterminable or predetermined behaviour.

**2.** Method according to Claim 1, **characterized in that**, before a steering lock (C) is reached, the output-angle movement ($\delta_M$) initiated by the actuating drive (13; 23) is reduced to the value zero.

**3.** Method according to Claim 1, **characterized in that** the output-angle movement ($\delta_M$) initiated by the actuating drive (13; 23) is at least reduced, in particular by means of a predeterminable or predetermined behaviour, within a specific range (A, B) before a steering lock is reached.

**4.** Method according to Claim 3, **characterized in that**, after the reduction in the output-angle movement ($\delta_M$) initiated by the actuating drive (13; 23), the actuating drive is switched off and/or braked before a steering lock is reached, there being provision, in particular, for the switch-off and/or for braking to be performed as a function of a comparison of the detected steering movement ($\delta_V$) of the steerable wheel (15a, 15b) and/or of the detected steering-wheel angle movement ($\delta_L$) initiated by the driver of the vehicle with a predeterminable or predetermined threshold value (D).

**5.** Method according to one of the preceding claims, **characterized in that** the reaching of the steering locks and/or the beginning and/or the end of the reduction in the output-angle movement ($\delta_M$) initiated by the actuating drive (13; 23) takes place as a result of a detection of the steering movement ($\delta_V$) of the steerable wheel (15a, 15b) and/or as the result of a detection of the steering-wheel angle movement ($\delta_L$) initiated by the driver of the vehicle.

**6.** Method according to Claims 3 and 5, **characterized in that** the range (A, B) is determined by at least one threshold value of the steering movement ($\delta_V$) of the steerable wheel (15a, 15b) and/or for the steering-wheel angle movement ($\delta_L$) initiated by the driver of the vehicle.

**7.** Device for operating a steering system for a motor vehicle with at least one steerable wheel (15a, 15b), with an actuating drive (13; 23) and with a variable-ratio gear unit (12; 22), by means of which the steering-wheel angle movement ($\delta_L$) initiated by the driver of the vehicle and the output-angle movement ($\delta_M$) initiated by the actuating drive (13; 23) are superposed in order to generate the steering movement ($\delta_V$) of the steerable wheel (15a, 15b) within predetermined steering locks (C), means (27,23) being provided, by which the output-angle movement ($\delta_M$) is formed at least as a function of the detected steering-wheel angle movement ($\delta_L$), **characterized in that** means (27) are provided, by which, before a steering lock (C) is reached, the output-angle movement ($\delta_M$) initiated by the actuating drive (13; 23) is reduced, in particular to the value zero, by means of a predeterminable or predetermined behaviour.

8. Device according to Claim 4, **characterized in that** means are provided, by which, after the reduction in the output-angle movement ($\delta_M$) initiated by the actuating drive (13; 23), the actuating drive is switched off and/or braked before a steering lock is reached, there being provision, in particular, for the switch-off and/or for the braking to be performed as a function of a comparison of the detected steering movement ($\delta_V$) of the steerable wheel (15a, 15b) and/or of the detected steering-wheel angle movement ($\delta_L$) initiated by the driver of the vehicle with a predeterminable or predetermined threshold value (D).

## Revendications

1. Procédé de mise en oeuvre d'un système de direction d'un véhicule automobile comportant au moins un volant (15a, 15b), un actionneur (13, 23) et une transmission de combinaison (12, 22) à l'aide de laquelle le mouvement de l'angle du volant $\delta_L$, commencé par le conducteur du véhicule et le mouvement angulaire final $\delta_M$, commencé par l'actionneur (13, 23) sont combinés pour créer le mouvement de direction $\delta_V$, de la roue directrice (15a, 15b) entre les butées de direction (C) prédéterminées, le mouvement angulaire final $\delta_M$ étant formé au moins en fonction du mouvement détecté de l'angle du volant $\delta_L$,
**caractérisé en ce que**
avant d'atteindre une butée de direction (C), on réduit le mouvement angulaire final $\delta_M$, commencé par l'actionneur (13, 23) selon un comportement prédéfini ou susceptible de l'être.

2. Procédé selon la revendication 1,
**caractérisé en ce qu'**
avant d'atteindre une butée de direction (C) on réduit le mouvement angulaire final $\delta_M$, commencé par l'actionneur (13, 23) à la valeur 0.

3. Procédé selon la revendication 1,
**caractérisé en ce qu'**
on réduit le mouvement angulaire final $\delta_M$, commencé par l'actionneur (13, 23) à l'intérieur d'une plage déterminée (A, B) avant d'atteindre une butée de direction, notamment selon un comportement prédéterminé ou susceptible de l'être.

4. Procédé selon la revendication 3,
**caractérisé en ce qu'**
après réduction du mouvement angulaire final $\delta_M$, commencé par l'actionneur (13, 23), on coupe et/ou on freine l'actionneur avant d'atteindre une butée de direction, en prévoyant notamment que la coupure et/ou le freinage se fassent en fonction de la comparaison du mouvement de direction détecté $\delta_V$ de la roue directrice (15a 15b) et/ou de la saisie du mouvement angulaire du volant $\delta_L$ commencé par le conducteur du véhicule à un seuil prédéterminé (D) ou susceptible de l'être.

5. Procédé selon l'une des revendications précédentes,
**caractérisé en ce que**
la saisie du mouvement de direction $\delta_V$ de la roue directrice (15a, 15b) et/ou par une saisie du mouvement de l'angle de volant $\delta_L$, commencé par le conducteur du véhicule, détermine le fait d'atteindre les butées des directions et/ou le début/ou la fin de la réduction du mouvement angulaire final $\delta_M$, commencé par l'actionneur (13, 23).

6. Procédé selon les revendications 3 et 5,
**caractérisé en ce qu'**
on détermine la plage (A, B) par au moins un seuil pour le mouvement de direction $\delta_V$ de la roue directrice (15a, 15b) et/ou pour le mouvement angulaire du volant $\delta_L$, commencé par le conducteur du véhicule.

7. Dispositif de mise en oeuvre d'un système de direction d'un véhicule automobile comprenant au moins un volant (15a, 15b), un actionneur (13, 23) et une transmission de combinaison (12, 22) à l'aide de laquelle on combine le mouvement angulaire du volant $\delta_L$, commencé par le conducteur du véhicule, et le mouvement angulaire final $\delta_M$, commencé par l'actionneur (13, 23) pour créer le mouvement de direction $\delta_V$ de la roue directrice (15a, 15b) entre des butées de direction (C) prédéterminées, des moyens (27, 23) étant prévus pour former le mouvement angulaire final $\delta_M$, au moins en fonction du mouvement angulaire de l'angle du volant $\delta_L$,
**caractérisé par**
des moyens (27) à l'aide desquels avant d'atteindre une butée de direction (C), on réduit le mouvement angulaire final $\delta_M$, commencé par l'actionneur (13, 23) selon un comportement prédéterminé ou susceptible de l'être et on le réduit notamment jusqu'à 0.

8. Dispositif selon la revendication 7,
**caractérisé par**
des moyens pour couper et/ou freiner l'actionneur avant d'atteindre une butée de direction, après la réduction du mouvement angulaire final $\delta_M$, commencé par l'actionneur (13, 23),
et notamment la coupure et/ou le freinage étant faits en fonction d'une comparaison du mouvement de direction détecté $\delta_V$ de la roue directrice (15a, 15b) et/ou du mouvement angulaire du volant $\delta_L$ saisi, commencé par le conducteur du véhicule, à un seuil (D) prédéterminé ou susceptible de l'être.

# Fig. 1
### (Stand der Technik)

15a

16

101    12    102    $\delta_L'$    103

$i_{\underline{ü}}$    $i_{\underline{L}}$    14

$\delta_L$    16

104

$\delta_M$

M    13

11

15b

$\delta_V$

# Fig. 2
### (Stand der Technik)

21    22    24

| Lenk-rad | $\delta_L$ | Überlag.-Getr. | $\delta_L'$ | Lenk-getriebe |

$\delta_M$

$\delta_V$

Sensor    28    El.-Motor    23    Fahrzeug    25

27    26

$\delta_L$    Steuer-gerät    Sensoren

Fig. 3

Fig. 4

Beginn der Auslaufzone

Ende der Auslaufzone

Lenkanschlag

Legend:
- - - 1 Lenkradwinkel-geschwindigkeit $\frac{d}{dt}\delta_L$
- · - 2 Radwinkelgeschwindig-keit mit Überlagerung und Auslauf $\frac{d}{dt}\delta_V$
—— 3 Motorwinkel-geschwindigkeit $\frac{d}{dt}\delta_M$
- - - 4 Radwinkelgeschwindig-keit ohne Überlagerung $\frac{d}{dt}\delta_{V'}$

EP 0 904 225 B1

# Fig. 5

Beginn der Auslaufzone

Ende der Auslaufzone

Lenkanschlag

Radwinkel mit Auslauf

Motorwinkel

Motor anhalten und Strom abschalten

Abschaltschwelle

EP 0 904 225 B1